# EUROPEAN PATENT SPECIFICATION

(11) **EP 1 952 980 B1**
(45) Date of publication and mention of the grant of the patent: **14.04.2021**
(21) Application number: 07114513.0
(22) Date of filing: 17.08.2007
(51) Int. Cl.: B32B 27/00, B32B 9/02, B32B 9/04, B32B 15/08, B32B 27/12

(54) **COVERING SHEET**
DECKBLECH
FEUILLE DE COUVERTURE

(30) Priority: 12.12.2006 ES 200603204
(43) Date of publication of application: 06.08.2008
(73) Proprietor: Tunnel Waterproofing, S.L., 08174 Sant Cugat del Valles Barcelona (ES)
(72) Inventor: Gordún Burillo, Fernando, 08017, BARCELONA (ES)
(74) Representative: Isern Patentes y Marcas S.L.

(56) References cited:
- EP-A- 1 147 719
- WO-A-01/06881
- ES-A1- 2 118 035
- FR-A- 2 453 686
- US-A- 4 927 705

## Description

### Background of the invention

In tunnels, mines and underground construction works in general the presence of water creates important problems, during the different construction steps and also during the life of the construction work.

The risks produced by the formation of pools or ice in the tracks of road traffic are well-known. In railroad tunnels the water is also a danger of the installations, and in areas with very low winter temperatures, the formation of ice can break the line by deformation and it can also prevent the trains to pass.

In any underground construction work, the water filtering damage the expensive control, service and exploitation equipment, and frequently the concrete structures need an special treatment to prevent their decalcification and later expansion by oxidation.

The conventional waterproofing systems technically solve a lot of these problems, by their costs reach generally too high values. This is evident, specially, when there are special difficulties such as great filtrations of water during the application of the waterproofing, extreme weather conditions, adaptation to very irregular surfaces with important deformations, and even the need of waterproofing after the construction work has ended.

Now a kind of covering is known, which has reasonable cost, made from a sheet of plastic material, comprising usually three layers, a first layer of raffia, a second layer of foam and a third layer of polyethylene.

To the date, the regulations relating to the fireproof of said sheet permitted this sheet to have a medium inflammability, but now the regulations force the sheet to be not inflammable, i.e., its combustion cannot continue when the heat from an external focus disappears.

The sheet disclosed in the Spanish patent application P9600657, published with number ES2118035 is formed by several layers, its first layer of raffia comprising a covering of plastic material, and the third layer comprising a plastic material layer metalized with aluminium.

### Description of the invention

With the improvements of the invention said drawbacks can be solved, presenting other advantages that will be described.

The covering sheet comprises a first layer of raffia, a second intermediate layer of foam and a third layer composed by a film of plastic material, said first layer of raffia being coated with film of plastic material, the second layer of foam comprising halogenated compounds and said third layer being coated with a layer of plastic material metalized with aluminum.

The improvements of the present invention are characterized in that said film of plastic material coating the first layer of raffia is also metalized with aluminum.

Thanks to this feature the covering sheet is fireproof, obtaining its classification as contractual M1.

### Brief description of the drawings

For a better understanding of what has been described some drawings are attached, in which, diagrammatically and only as a non-limitative example, a practical case of embodiment is shown.
Fig. 1 is a plan view of a portion of the sheet of the invention;
Fig. 2 is a section view along line II-II of Fig. 1;
Fig. 3 is an enlargement of the section of the third layer; and
Fig. 4 is an enlargement of the section of the first layer.

### Description of a preferred embodiment

As it can be seen in the figures, the covering sheet 1 of the invention comprises three layers, the first layer 3 being the external one and the third layer 2 being the internal one, i.e., that which is in contact of the wall of the tunnel. Between both layers a second layer 4 of foam of polyethylene chemically crosslinked of closed cell is interposed.

The layer of foam 4 and the third layer 2 are corrugated to permit the water to flow, avoiding its accumulation.

The layer 4 of foam comprises halogenated compounds, which are present according to a ratio comprised between 5% and 25%, the used halogen being preferably bromine. The reason to use halogens is that they are 02 consumers, obtaining non inflammable foam.

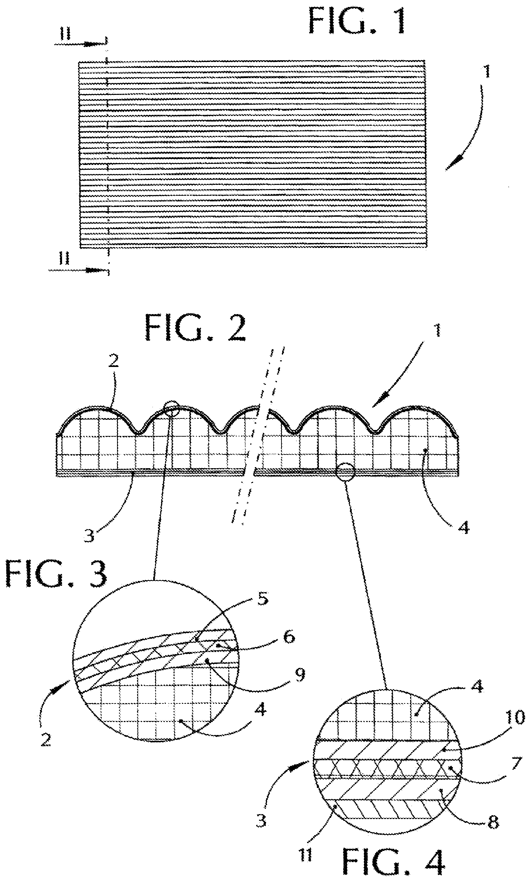

In Fig. 3 it can be seen that the third layer 2 is composed by two films of polyethylene 5, 9 metalized with aluminum 6 by high vacuum, with a thickness of about 50 µm.

In Fig. 4 it can be seen that the first layer 3 is formed by a layer of raffia 7 interposed between two films of polyethylene 8, 10, the layer of raffia 7 being formed with 5 yarns/cm of warp and 5 yarns/cm of weave.

According to the invention, the most external film of polyethylene 8 is metalized with aluminum, forming an external layer of aluminum 11 with a thickness comprised between 45 and 200 µm.

Even though reference is made to an specific embodiment of the invention, it is apparent of a person skilled in the art that the described improvements are susceptible of several variations and modifications, and that all the details mentioned can be substituted by other technically equivalent ones, without departing from the scope of protection defined by the attached claims.

## Claims

1. A fireproof sheet for covering tunnels, mines and underground construction works, comprising three layers:
- a first layer (3) which is the external one,
- a third layer (2) which is the internal one in contact with the tunnel, mine and underground construction works, and
- a second layer (4) that is a layer of foam which is between the first layer (3) and the third layer (2), and which is a layer of foam of polyethylene chemically crosslinked of closed cell,
wherein the second layer (4) and the third layer (2) are corrugated, and
wherein the first layer (3) is formed by a film of raffia (7) interposed by two films of polyurethane (8, 10); the second layer (4) comprises halogenated compounds according to a ratio comprised between 5 % and 25 %; and the third layer (2) is composed by two films of polyethylene (5, 9) metalized with aluminum (6) by high vacuum, with a thickness of about 50 µm,
wherein the layer of raffia (7) is formed with 5 yarns/cm of warp and 5 yarns/cm of weave;
**characterized in that** it comprises a further external aluminum layer (11) having a thickness comprised between 45 and 200 µm, coating the most external film of polyethylene (8) of the first layer (3).

## Patentansprüche

1. Feuerfeste Folie zum Abdecken von Tunneln, Minen und unterirdischen Bauarbeiten, umfassend drei Schichten:
- eine erste Schicht (3), welche die externe ist,
- eine dritte Schicht (2), welche die interne in Kontakt mit dem Tunnel, der Mine und den unterirdischen Bauarbeiten ist, und
- eine zweite Schicht (4), die eine Schaumstoffschicht ist, die zwischen der ersten Schicht (3) und der dritten Schicht (2) ist und die eine Schaumstoffschicht aus Polyethylen ist, das chemisch geschlossenzellig vernetzt ist,
wobei die zweite Schicht (4) und die dritte Schicht (2) gewellt sind und
wobei die erste Schicht (3) aus einem Raffiafilm (7) gebildet ist, zwischen dem zwei Polyurethanfilme (8, 10) angeordnet sind; die zweite Schicht (4) halogenierte Verbindungen gemäß einem Verhältnis zwischen 5% und 25% umfasst; und die dritte Schicht (2) durch zwei Polyurethanfilme (5, 9) zusammengesetzt ist, die mit Aluminium (6) durch Hochvakuum metallisiert werden, mit einer Dicke von etwa 50 µm, wobei die Raffiaschicht (7) mit 5 Fäden/cm Kettfaden und 5 Fäden/ cm Geflecht gebildet ist;
**dadurch gekennzeichnet, dass** sie eine weitere externe Aluminiumschicht (11) mit einer Dicke zwischen 45 und 200 µm umfasst, die den meisten externen Polyethylenfilm (8) der ersten Schicht (3) beschichtet.

## Revendications

1. Feuille ignifuge pour recouvrir les tunnels, les mines et les travaux de construction souterrains, comprenant trois couches :
- une première couche (3) qui est la couche externe,
- une troisième couche (2) qui est la couche interne en contact avec le tunnel, la mine ou les travaux de construction souterrains, et
- une deuxième couche (4) qui est une couche de mousse qui est entre la première couche (3) et la troisième couche (2), et qui est une couche de mousse de polyéthylène réticulée chimiquement à cellules fermées,
dans laquelle la deuxième couche (4) et la troisième couche (2) sont ondulées, et
dans laquelle la première couche (3) est formée d'un film de raphia (7) intercalé entre deux films de polyuréthane (8, 10); la deuxième couche (4) comprend des composés halogénés selon un rapport compris entre 5 % et 25 % ; et la troisième couche (2) est composée de deux films de polyéthylène (5, 9) métallisés avec de l'aluminium (6) par vide poussé, d'une épaisseur d'environ 50 µm,
dans laquelle la couche de raphia (7) est formée avec 5 fils/cm de chaîne et 5 fils/cm d'armure ;
**caractérisée en ce qu'elle** comprend une autre couche externe d'aluminium (11) ayant une épaisseur comprise entre 45 et 200 µm, enrobant le film le plus externe de polyéthylène (8) de la première couche (3).
